# EUROPÄISCHE PATENTSCHRIFT

(11) **EP 1 442 820 B1**
(45) Veröffentlichungstag und Bekanntmachung des Hinweises auf die Patenterteilung: **22.10.2008**
(21) Anmeldenummer: 03030002.4
(22) Anmeldetag: 31.12.2003
(51) Int. Cl.: B23K 20/12

(54) **Verfahren zum Verbinden von wenigstens zwei aneinanderliegenden Werkstücken nach der Methode des Reibrührschweissens**
Method for joining at least two workpieces by friction stir welding
Procédé pour joindre au moins deux pièces avec soudage par friction à mouvement cyclique

(30) Priorität: 30.01.2003 DE 10303623
(43) Veröffentlichungstag der Anmeldung: 04.08.2004
(73) Patentinhaber: GKSS-Forschungszentrum Geesthacht GmbH, 21502 Geesthacht (DE)
(72) Erfinder: Schilling, Christoph, 21483 Lütau (DE); von Strombeck, Alexander, 21039 Hamburg (DE); dos Santos, Jorge, Dr., 21395 Tespe (Avendorf) (DE)
(74) Vertreter: UEXKÜLL & STOLBERG

(56) Entgegenhaltungen:
- EP-A- 1 206 995
- EP-A- 1 279 458
- US-A1- 2002 014 516
- PATENT ABSTRACTS OF JAPAN vol. 1999, no. 05, 31. Mai 1999 (1999-05-31) -& JP 11 028583 A (SHOWA ALUM CORP), 2. Februar 1999 (1999-02-02)

## Beschreibung

Die Erfindung betrifft ein Verfahren zum Verbinden von wenigstens zwei aneinander liegenden Werkstücken nach der Methode des Reibrührschweißens nach dem Oberbegriff des Anspruchs 1, wobei die Werkstücke einen Verbindungsbereich zwischen sich einschließen, mittels eines rotierend angetriebenen stiftartigen Vorsprungs, der bei seiner Rotation im Kontakt mit dem Verbindungsbereich der Werkstücke den Verbindungsbereich wenigstens teilweise plastifiziert. Ein solches Verfahren ist aus der EP 1 279 458 bekannt.

Ein Verfahren ähnlicher Art ist auch aus EP-B-0 615 480 bekannt. Das Reibrührschrveißen, vielfach auch FSW (Friction Stir Welding) genannt, ist vom Grundsatz her seit mehreren Jahren bekannt. Ursprünglich wurde das Reibschweißen derart ausgeführt, daß zwei Werkstücke, die miteinander durch Reibschweißung verbunden werden sollen, gegeneinander im gewünschten Verbindungsbereich bewegt werden und dabei mit einer voreinstellbaren Kraft gegeneinander gedrückt werden. Durch die Reibung entsteht Wärme, so daß mittels der Wärme letztlich eine Plastifizierung des Werkstoffs der Werkstücke in dem Verbindungsbereich erfolgt. Ist der Werkstoff ausreichend plastifiziert, kann zumindest im oberflächennahen Bereich der Verbindung eine ausreichende Durchmischung der Werkstoffe beider Werkstücke erfolgen, so daß bei Abkühlung die gewünschte Schweißverbindung zwischen den beiden Werkstücken ausgebildet wird.

Bei dem eingangs genannten Verfahren wird ein stiftartiger Vorsprung von einem Antrieb bzw. einem Motor in eine geeignet große Rotation versetzt, an den Stirnbereich zweier zu verbindender, nahezu stoßartig aneinandergelegter Werkstücke angesetzt und der stiftartige Vorsprung wird geeignet geführt, was bspw. mit einer speziellen Führungsvorrichtung oder auch mit einem Roboter geschehen kann, und zusätzlich bspw. in eine Translationsbewegung längs der Stoßkanten beider zu verbindender Werkstücke versetzt. Ist nach Beginn des Schweißvorganges durch die infolge der Rotation des stiftartigen Vorsprungs mit dem Werkstoff der Werkstücke der angrenzende Werkstoffbereich erzeugte Reibungswärme mit dem Werkstoff der Werkstoff ausreichend plastifiziert, wird unter Aufrechterhaltung der Rotationsbewegung des stiftartigen Vorsprungs die Translationsbewegung längs der Stoßkante zwischen den beiden Werkstücken ausgeführt, so daß bspw. eine Längsnaht ausgebildet wird.

Darüber hinaus sind weitere Schweißverfahren bekannt, um bspw. im Kraftfahrzeugbau oder Flugzeugbau Bauteile aus Leichtmetallwerkstoffen mit Werkstoffen aus Stahl zu verbinden. Mechanische Fugeverfahren sowie Klebetechniken werden insbesondere hierfür eingesetzt, um eine punktförmige oder flächige Verbindung zwischen einem Werkstück aus Leichtmetall und einem Werkstück aus Stahl herzustellen. Reibschweißverbindungen dieser Werkstoffkombination werden bei Strukturbauteilen meist nur als Bolzenreibschweißungen ausgeführt. Die bisherigen Reibschweißverfahren sind ungeeignet, um Werkstoffe über einen längeren Abschnitt stoffschlüssig miteinander zu verbinden. Dadurch zeigen die mittels einer Reibschweißung verbundenen Werkstücke nicht die Festigkeit, die in vielen Verbindungsfällen unbedingt erforderlich ist.

Die Verwendung von Werkstücken aus Aluminium bzw. Aluminiumlegierungen, wie sie bspw. im Flugzeugbau, aber auch im Kraftfahrzeugbau Verwendung finden, ist zur Ausbildung einer Schweißverbindung bei zu verbindenden Werkstücken problematisch, da Aluminium bzw. Aluminiumlegierungen mit dem Sauerstoff der Umgebungsluft im Oberflächenbereich eine äußerst hinderliche Oxidschicht bildet, die einerseits einen beträchtlichen elektrischen Widerstand zwischen den zu verbindenden Werkstücken bildet und zudem in dem bei der Ausführung der Schweißverbindung entstehenden plastifizierten Bereich der Werkstücke enthalten ist, so daß Störungen aus Aluminiumoxiden in den plastifizierten Bereich der zu verbindenden Werkstücke eingelagert sind. Außerdem entstehen spröde intermetallische Phasen, da die Werkstücke unterschiedliche Schmelz- und Erstarrungspunkte besitzen.

Die EP 1 206 995 A offenbart ein Verfahren zum Überlappschweißen von zwei Platten mit einem Reibrührwerkzeug, das einen rotierenden Vorsprung aufweist, der durch das obere Werkstück bis in eine im unteren Werkstück vorgesehene Nut eingedrückt wird, die nach dem Schweißvorgang mit Material aufgefüllt ist.

Bei der JP 11-028 583 A wird ein Formschluss von zwei Bauteilen vorgestellt, die mittels einer Stoßverbindung miteinander verschweißt werden sollen. Der Formschluss erfüllt dabei die Aufgabe, das Auseinanderdrücken der zwei Bauteile beim Schweißen zu vermeiden. Auch dabei geht der Formschluss in der Verbindung auf; er ist nach dem Schweißvorgang nicht mehr vorhanden.

Die EP 1 279 458 A offenbart die Herstellung einer Stoßverbindung von zwei Blechen. Bei einer Zugbelastung auf den Verbindungsbereich wird dieser Formschluß aber nur einen geringen Festigkeitszuwachs bringen. Auch ist ein solcher Formschluß nur bei Blechen mit einer höheren Wandstärke sinnvoll oder sogar erst möglich.

Es ist somit Aufgabe der vorliegenden Erfindung, ein Verfahren zu schaffen, mit dem eine stoffschlüssige Verbindung zwischen zu verbindenden metallischen und auch nichtmetallischen Werkstücken auf einfache Weise möglich ist, ohne daß zusätzliche Verbindungselemente zur Ausbildung der Verbindung benötigt werden, die mit hoher Präzision und reproduzierbar auf einfache Weise angepaßt werden können, die geeignet sind, eine gasdichte Verbindung auszubilden, wobei das Verfahren einfach ausgeführt bzw. einfach realisiert werden können soll, und wobei das Verfahren auch zur Anwendung mit bzw. in Fertigungsrobotern geeignet sein soll.

Gelöst wird die Aufgabe durch ein Verfahren gemäß Anspruch 1. Die Erfindung beruht auf dem Gedanken, daß eine stoffschlüssige Verbindung für eine Kombination von Werkstoffen mittels des Reibrührschweißverfahrens erzielt wird. Die Verbindung der Werkstoffe ist aufgrund unterschiedlicher Schmelzpunkte der Werkstoffe durch ein Schmelzschweißverfahren nicht herstellbar. Erfindungsgemäß ist es möglich, eine stoffschlüssige Verbindung dieser Werkstoffe auch mit einer Längsausdehnung herzustellen. Ein weiterer Vorteil des Verfahrens besteht darin, daß, anders als bei den bisherigen unterschiedlichen Verfahren, zur Verbindung zweier oder mehrerer Werkstücke keine Vorbereitung des Verbindungsortes erforderlich ist. Darüber hinaus sind auch keine Verbrauchsmaterialien im Einsatz. Dadurch, daß der stiftartige Vorsprung nur bis zur Oberfläche eines unteren Werkstücks ein- bzw. vordringt, wird unter fortlaufender Rotation des Vorsprungs eine metallisch saubere Oberfläche z.B. eines Stahlwerkstückes erreicht. Hierdurch wird eine gasdichte und auch stoffschlüssige Verbindung der aneinander grenzenden und zu verbindenden Werkstücke realisiert.

Vorteilhafterweise wird das untere Werkstück mit dem wenigstens einen darüber angeordneten Werkstück stoffschlüssig verbunden, so daß die Verbindung mit einer gewissen Festigkeit versehen wird. Durch die Rotation des Vorsprungs wird die Oberfläche des unteren Werkstücks angerauht, so daß ein lokaler Stoffschluß z.B. eines Aluminiumwerkstoffs mit einem Stahlwerkstoff erreicht wird.

Außerdem wird bei der Verwendung eines Reibschweißwerkzeugs gewährleistet, daß vorteilhafterweise die Oberfläche des unteren Werkstücks und/oder des oberen Werkstücks von Oxiden oder oxidhaltigen Verbindungen befreit werden, so daß störende bzw. hinderliche Oxidschichten entfernt werden und die Verbindung zwischen den zu verbindenden Werkstoffen verbessert wird. Außerdem wird der elektrische Widerstand bspw. bei der Verbindung eines Aluminiumwerkstoffs mit einem Stahlwerkstoff erniedrigt. Es ist ebenso möglich, daß die Oberfläche des oberen Werkstückes gereinigt wird.

Wenn der stiftartige Vorsprung entlang eines Verbindungsbereiches bewegt wird, wird über einen längeren Abschnitt eine dauerhafte Verbindung der Werkstücke erreicht. Somit werden über eine bestimmte Länge die Werkstücke dauerhaft und mit einer höheren Festigkeit verbunden. Im Rahmen der Erfindung ist es selbstverständlich, daß eine Relativbewegung zwischen dem Verbindungsbereich und dem stiftartigen Vorsprung ausgeführt wird, wobei es möglich ist, daß der stiftartige Vorsprung bewegt wird oder die Werkstücke bezüglich eines ortsfesten Vorsprungs bewegt werden.

Eine Verbesserung der Verbindung wird dadurch erreicht, daß der sich plastifizierende Werkstoff mit Druck beaufschlagt wird, so daß nach Abkühlung des Werkstoffs das untere Werkstück mit den darauf angeordneten Werkstücken verbunden ist.

In einer Weiterbildung der Erfindung wird vorgeschlagen, daß der Druck mittels einer Schulter des stiftartigen Vorsprungs erzeugt wird.

Die Festigkeit der Verbindung der Werkstücke wird noch erhöht, wenn die Werkstücke formschlüssig miteinander verbunden werden. Zur Festigkeit der Verbindung tragen somit nicht nur der Stoffschluß bei, sondern auch der zusätzlich erfindungsgemäße Formschluß, so daß die Fügegeometrie bestimmter Werkstücke berücksichtigt wird.

Insbesondere wird der Formschluß der Werkstücke durch Einbringen des sich plastifizierenden Werkstoffs in wenigstens eine Ausnehmung des unteren Werkstücks ausgebildet.

Vorteilhafterweise entspricht die Länge des stiftartigen Vorsprungs im wesentlichen der Dicke des wenigstens einen oberhalb des unteren Werkstücks anliegenden Werkstücks. Auf diese Weise wird gewährleistet, daß der stiftartige Vorsprung in das untere Werkstück nicht eindringt.

Um den plastifizierten Werkstoff gut mit dem unteren Werkstück, in den der Vorsprung nicht eingedrungen ist, zu verbinden, ist vorteilhafterweise der stiftartige Vorsprung auf einer Schulter angeordnet. Mittels der Schulter kann Druck ausgeübt werden auf den plastifizierten Werkstoff.

In einer Weiterbildung der Erfindung wird vorgeschlagen, daß der stiftartige Vorsprung und/oder die Schulter mit einer Verschleißschicht versehen sind, so daß die Vorrichtung zuverlässig die Verbindung der Werkstücke herstellt. Die Verschleißschicht z.B. aus Diamant oder einem anderen Hartstoff erhöht die Lebensdauer und die Handhabung der Vorrichtung.

Die Erfindung wird unter Bezugnahme auf die nachfolgenden schematischen Zeichnungen anhand eines Ausführungsbeispieles eingehend beschrieben. Darin zeigen:
- Fig. 1a - Fig. 1c: schematisch einzelne Verfahrensschritte zur Verbindung zweier Werkstücke und
- Fig. 2: einen schematischen Querschnitt durch eine hergestellte Verbindung.

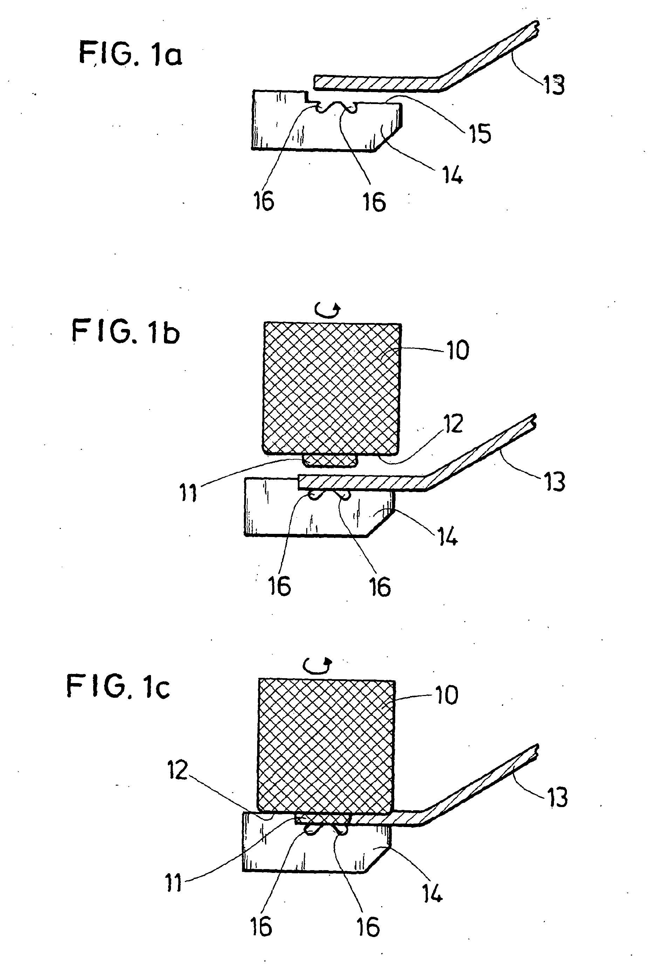

In den Figuren 1a bis 1c sind die Verfahrensschritte zur Ausbildung einer Verbindung zwischen zwei Werkstücken 13, 14 im Querschnitt schematisch dargestellt. Das Werkstück 13 wird in einer Ausfräsung 15 des Werkstücks 14 angeordnet. Das Werkstück 14 verfügt ferner in der Ausfräsung 15 über Nuten 16 (Fig. 1a).

Nach Plazierung des Werkstücks 13 auf dem Werkstück 14 in der Ausfräsung 15 wird ein Werkzeug 10 zum Reibschweißen von der Seite des Werkstoffs 13 zugeführt. Das Werkzeug 10 verfügt an der antriebsseitigen Spitze über einen Vorsprung 11, der auf einer Schulter 12 des Werkzeugs 10 angeordnet ist (Fig. 1b).

Unter Rotation und Ausübung einer axialen Kraft wird zwischen dem Werkzeug 10 bzw. dessen Vorsprung 11 und dem Werkstück 13 Reibungswärme erzeugt, die den Werkstoff 13 lokal plastifiziert und das Eindringen des Vorsprungs 11 ermöglicht. Wenn der Vorsprung 11 das Werkstück 13 durchdrungen hat, berührt es die Oberfläche des Werkstoffs 14. Durch das Schweißwerkzeug 10 wird das Werkstück 13 z.B. aus Aluminium, lokal plastifiziert und durch den Druck des Werkzeugs mittels der Schulter 13 in die Nuten 16 gepreßt (Fig. 1c). Die Schulter 12 des Werkzeugs 10 erzeugt aufgrund der ausgeübten axialen Kraft einen Druck in dem plastifizierten Werkstoff des Werkstücks 13. Anschließend wird das Schweißwerkzeug 10 einen vorbestimmten Verbindungsbereich entlang bewegt.

Durch das Reiben des Vorsprungs 11 wird zusätzlich die Oberfläche der Ausfräsung 15, auf der das Werkstück 13 anliegt, von Oxiden befreit, so daß eine gasdichte Verbindung zwischen den Werkstücken 13 und 14 ausgebildet wird. Durch das Eindringen von plastifiziertem Werkstoff in die Nuten 16 unter Druck wird ein zusätzlicher Formschluß erzielt, so daß dieses Verklammern bzw. dieser Formschluß zu einer Erhöhung der Verbindungsfestigkeit zwischen den verbundenen Werkstücken führt.

Es hat sich gezeigt, daß das erfindungsgemäße Verfahren unter Anwendung der Methode des Reibrührschweißens für die Herstellung einer Verbindung von Leichtmetall- und Stahlwerkstoffen eingesetzt werden kann, da durch das erfindungsgemäße Verfahren und die Vorrichtung einfach eine stabile und feste Verbindung erreicht wird.

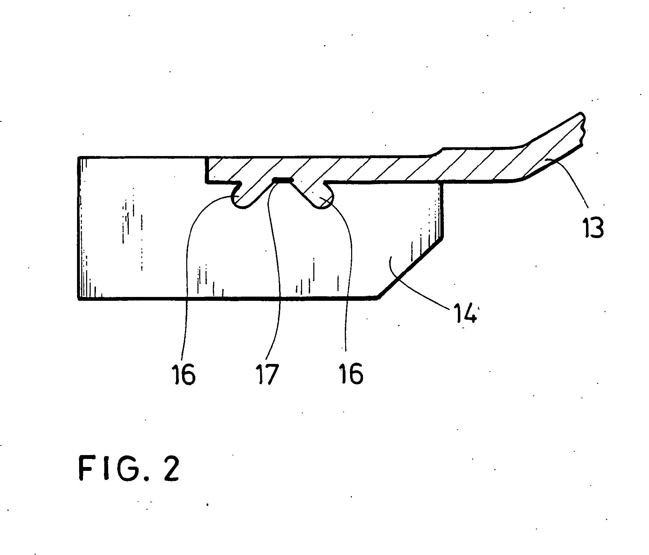

In Fig. 2 ist ein Querschnitt durch eine erfindungsgemäße Verbindung der Werkstücke 13 und 14 im Detail gezeigt. Durch das Einbringen des plastifizierten Werkstoffs in die Nuten 13 wird ein Formschluß des Werkstücks 13 mit dem Werkstück 14 erreicht. Zusätzlich ist im Steg 17 zwischen den beiden Nuten 16 ein Stoffschluß der beiden Werkstücke 13, 14 ausgebildet.

### Bezugszeichenliste

- 10: Werkzeug
- 11: Vorsprung
- 12: Schulter
- 13: Werkstück
- 14: Werkstück
- 15: Ausfräsung
- 16: Nut
- 17: Steg

## Patentansprüche

1. Verfahren zum Verbinden von wenigstens zwei übereinanderliegenden Werkstücken (13, 14) nach der Methode des Reibrührschweißens, wobei das obere Werkstück (13) und das untere Werkstück (14) einen Verbindungsbereich zwischen sich einschließen, mittels eines rotierend angetriebenen stiftartigen Vorsprungs (11), der bei seiner Rotation in Kontakt mit dem Verbindungsbereich der Werkstücke (13, 14) den Verbindungsbereich wenigstens teilweise plastifiziert, **dadurch gekennzeichnet, daß** der stiftartige Vorsprung (11) zur Ausführung einer Verbindung durch den sich plastifizierenden Werkstoff des oberen Werkstücks (13) nur bis zur Oberfläche des unteren Werkstücks (14) bewegt wird und durch Reibung des stiftartigen Vorsprungs (11) auf der Oberfläche des unteren Werkstücks (14) unter fortlaufender Rotation eine metallisch saubere Oberfläche erzeugt wird.

2. Verfahren nach Anspruch 1, **dadurch gekennzeichnet, daß** das untere Werkstück (14) mit dem darüber angeordneten Werkstück (13) stoffschlüssig verbunden wird.

3. Verfahren nach Anspruch 1 oder 2, **dadurch gekennzeichnet, daß** die Oberfläche des unteren Werkstücks (14) und/oder des oberen Werkstückes (13) von Oxiden oder oxidhaltigen Verbindungen befreit werden.

4. Verfahren nach einem oder mehreren der Ansprüche 1 bis 3, **dadurch gekennzeichnet, daß** der stiftartige Vorsprung (11) entlang des Verbindungsbereiches bewegt wird.

5. Verfahren nach einem oder mehreren der Ansprüche 1 bis 4, **dadurch gekennzeichnet, daß** der sich plastifizierende Werkstoff mit Druck beaufschlagt wird.

6. Verfahren nach Anspruch 5, **dadurch gekennzeichnet, daß** der Druck mittels einer Schulter (12) des stiftartigen Vorsprungs (11.) erzeugt wird.

7. Verfahren nach einem oder mehreren der Ansprüche 1 bis 6, **dadurch gekennzeichnet, daß** die Werkstücke (13, 14) formschlüssig verbunden werden.

8. Verfahren nach Anspruch 7, **dadurch gekennzeichnet, daß** der Formschluß der Werkstücke (13, 14) durch Einbringen des sich plastifizierenden Werkstoffs in wenigstens einer Ausnehmung (16) des unteren Werkstücks (14) ausgebildet wird.

## Claims

1. Method of joining at least two workpieces (13, 14) lying one above the other by the friction stir welding method so that the top workpiece (13) and the bottom workpiece (14) enclose a joining region between them, by means of a rotatingly driven pin-type projection (11) which at least partially plasticizes the joining region in contact with the joining region of the workpieces (13, 14) as it rotates, **characterised in that**, in order to produce a join by the plasticizing material of the top workpiece (13), the pin-type projection (11) is moved only as far as the surface of the bottom workpiece (14) and a metallically clean surface is produced due to friction of the pin-type projection (11) on the surface of the bottom workpiece (14) as it continually rotates.

2. Method as claimed in claim 1, **characterised in that** the bottom workpiece (14) is joined to the workpiece (13) disposed above it by a material join.

3. Method as claimed in claim 1 or 2, **characterised in that** the surface of the bottom workpiece (14) and/or the top workpiece (13) is free of oxides or compounds containing oxides.

4. Method as claimed in one or more of claims 1 to 3, **characterised in that** the pin-type projection (11) is moved along the joining region.

5. Method as claimed in one or more of claims 1 to 4, **characterised in that** pressure is applied to the plasticizing material.

6. Method as claimed in claim 5, **characterised in that** the pressure is generated by means of a shoulder (12) of the pin-type projection (11).

7. Method as claimed in one or more of claims 1 to 6, **characterised in that** the workpieces (13, 14) are positively joined.

8. Method as claimed in claim 7, **characterised in that** the workpieces (13, 14) are positively joined by introducing the plasticizing material into at least one recess (16) of the bottom workpiece (14).

## Revendications

1. Procédé de connexion d'au moins deux pièces oeuvre (13, 14) mutuellement superposées selon le procédé de soudage par frottement, dans lequel la pièce d'oeuvre supérieure (13) et la pièce d'oeuvre inférieure (14) délimitent entre elles une zone de liaison, au moyen d'une saillie de type cheville (11) entraînée en rotation, qui, lors de sa rotation en contact avec la zone de liaison des pièces d'oeuvre (13, 14), plastifie au moins partiellement la zone de liaison, **caractérisé par le fait que** la saillie de type cheville (11), pour effectuer une connexion au moyen du matériau se plastifiant de la pièce d'oeuvre supérieure (13), n'est déplacé que jusqu'à la surface supérieure de la pièce d'oeuvre inférieure (14) et, par frottement de la saillie de type cheville (11) sur la surface supérieure de la pièce d'oeuvre inférieure (14), il est engendré, par rotation continue, une surface supérieure métallique propre.

2. Procédé selon la revendication 1, **caractérisé par le fait que** la pièce d'oeuvre inférieure (14) est connectée par liaison par matériaux à la pièce associée (13).

3. Procédé selon l'une des revendications 1 et 2, **caractérisé par le fait que** la surface supérieure de la pièce d'oeuvre inférieure (14) et/ou de la pièce d'oeuvre supérieure (13) est débarrassée d'oxydes ou de composés contenant de l'oxyde.

4. Procédé selon l'une ou plusieurs des revendications 1 à 3, **caractérisé par le fait que** la saillie de type cheville (11) est déplacée le long de la zone de connexion.

5. Procédé selon l'une ou plusieurs des revendications 1 à 4, **caractérisé par le fait que** le matériau se plastifiant est mis sous pression.

6. Procédé selon la revendication 5, **caractérisé par le fait que** la pression est engendrée au moyen d'un épaulement (12) de la saillie de type cheville (11).

7. Procédé selon l'une ou plusieurs des revendications 1 à 6, **caractérisé par le fait que** les pièces d'oeuvre (13, 14) sont connectées par accouplement mécanique.

8. Procédé selon la revendication 7, **caractérisé par le fait que** l'accouplement mécanique des pièces d'oeuvre (13, 14) est effectué par amenée du matériau se plastifiant dans au moins un creux (16) de la pièce d'oeuvre inférieure (14).
